Europäisches Patentamt

European Patent Office

Office européen des brevets

(11) Veröffentlichungsnummer: **0 581 151 A1**

## EUROPÄISCHE PATENTANMELDUNG

(21) Anmeldenummer: **93111485.4**

(22) Anmeldetag: **16.07.93**

(51) Int. Cl.5: **G01D 3/08**, F02D 41/24

(30) Priorität: **22.07.92 EP 92112548**

(43) Veröffentlichungstag der Anmeldung:
**02.02.94 Patentblatt 94/05**

(84) Benannte Vertragsstaaten:
**DE FR GB IT**

(71) Anmelder: **SIEMENS AKTIENGESELLSCHAFT**
**Wittelsbacherplatz 2**
**D-80333 München(DE)**

(72) Erfinder: **Miener, Björn, Dipl.-Ing.**
**An der Kreuzbreite**
**D-93051 Regensburg(DE)**
Erfinder: **Foehr, Michael, Dipl.-Ing. (FH)**
**Strassackerweg 4**
**D-93073 Neutraubling(DE)**

(54) **Einrichtung zum Überwachen eines Sensors.**

(57) Verfahren zur Überwachung eines einer Brennkraftmaschine zugeord eten Sensors, der bei ordnungsgemäßer Funktion während bestimmter Motorbetriebsbereiche, insbesondere im Leerlauf, Teillastbereich oder Schubbetrieb Ausgangssignale abgibt, wobei bei fehlendem Sensorsignal in diesem Motorbetriebsbereich ein Zähler von einem Anfangszählerstand (Za) bis zu einem Endzählerstand (Ze) gezählt wird und bei Erreichen des Endzählerstandes ein Fehlereintrag (F, F') in einem Speicher abgelegt wird (für spätere Diagnose) und die Brenkraftmaschine abgeschaltet oder auf Notlaufbetrieb umgeschaltet wird. Das Verfahren ist geeignet für die Überwachung von einer Brennkraftmaschine zugeordneten Sensoren, beispielsweise Drehzahl-, Druck- oder Temperatursensoren.

FIG 1

EP 0 581 151 A1

Die Erfindung betrifft eine Einrichtung zum Überwachen eines Sensors nach dem Oberbegriff des Anspruchs 1 (DE 32 28 598 C2).

Beispielsweise bei Kurbelwellen- oder Nockenwellen-Sensoren (Impuls- oder Segmentgeber) oder Saugrohrdruck-Sensoren von Brennkraftmaschinen wirkt sich ein Fehler so aus, daß die der Brennkraftmaschine zugeordnete Steuereinrichtung keine oder fehlerhafte Zünd- und Einspritzsignale liefert und die Brennkraftmaschine beim Starten nicht anspringt, wenn keine Kurbelwellen- oder Nockenwellen-Impulse erscheinen, da diese die Grundlage für die Berechnung von Schließdauer, Zündzeitpunkt, Einspritzbeginn und Einspritzdauer bilden, oder, daß diese Werte bei fehlerhaftem Saugrohrdruck-Sensor falsch berechnet werden und die Brennkraftmaschine dadurch Schaden erleidet.

Wenn die Brennkraftmaschine nicht anspringt oder fehlerhaft arbeitet, wird üblicherweise zunächst das Steuergerät ausgetauscht und, wenn dem kein Erfolg beschieden ist, eine zeitraubende Fehlersuche eingeleitet.

Aus der DE 32 28 598 C2 ist ein Verfahren zur Überwachung eines Fahrgeschwindigkeitssensors bekannt, mittels welchem eine elektronische Steuereinrichtung einer Brennkraftmaschine gesperrt wird, wenn der Sensor eine rapide Fahrgeschwindigkeitsänderung meldet, welche im normalen Fahrbetrieb nie erreicht werden kann. Mit diesem Verfahren kann ein Geschwindigkeitssensor nur während des Fahrbetriebes, nicht aber bei Beginn der Fahrt überwacht werden.

Aus der EP 0 127 018 B1 ist ein Verfahren zur Ermittlung des Umgebungsluftdrucks mittels eines Saugrohrdruck-Sensors bekannt. Zwischen Einschalten der Zündung und Startbeginn wird der gemessene Druckwert dem Umgebungsluftdruck zugeordnet und gespeichert und laufend bei vorgegebenen Bedingungen (niedrige Motordrehzahl und große Last) aktualisiert, so daß mit einem einzigen Drucksensor sowohl der Saugrohrunterdruck als auch der Umgebungsluftdruck gemessen werden können.

Der Erfindung liegt die Aufgabe zugrunde, die Überwachung solcher Sensoren durchzuführen und auftretende Fehler wie Undichtigkeit einer Sensordruckleitung, Kurzschluß, Leitungsbruch oder Sensorausfall festzustellen und aufzuzeichnen, so daß bei einem Sensordefekt mittels einer Fehlerdiagnose Fehler direkt ermittelt und beseitigt werden können und dadurch nutzlose, aber kostspielige Fehlerbeseitigungsversuche sowie Motorschäden vermieden werden können.

Diese Aufgabe wird erfindungsgemäß durch die im kennzeichnenden Teil des Anspruchs 1 genannten Merkmale gelöst.

Eine vorteilhafte Ausgestaltung der Erfindung ist in den Unteransprüchen angegeben.

Ein Ausführungsbeispiel der Erfindung ist in der Zeichnung dargestellt und wird im folgenden näher beschrieben.

Es zeigen:

Figur 1    den zeitlichen Verlauf verschiedener Signale bei der Prüfung eines Kurbelwellen-Sensors, und

Figur 2    den zeitlichen Verlauf verschiedener Signale bei der Prüfung eines Saugrohrdruck-Sensors.

Das Ausführungsbeispiel bezieht sich auf eine Einrichtung zum Überwachen eines Kurbelwellen-Sensors und eines Saugrohrdruck-Sensors einer Brennkraftmaschine. Ein Kurbelwellen-Sensor gibt impulsförmige Signale ab, wenn die Brennkraftmaschine arbeitet, d.h., wenn sich die Kurbelwelle dreht. Diese Signale werden in der elektronischen Steuereinrichtung der Brennkraftmaschine zur Bestimmung verschiedener Steuergrößen für Zündung und Kraftstoffeinspritzung benötigt. Ein Ausbleiben dieser Signale bewirkt, daß die Brennkraftmaschine nicht anspringt oder fehlerhaft arbeitet.

Der Kurbelwellen-Sensor - gleiches gilt für einen Nockenwellen-Sensor - kann also nur bei sich drehender Kurbelwelle der Brennkraftmaschine überprüft werden.

Zwischen Einschalten der Zündung und Motorstart können demnach keine Kurbelwellen-Sensorsignale ausgegeben werden.

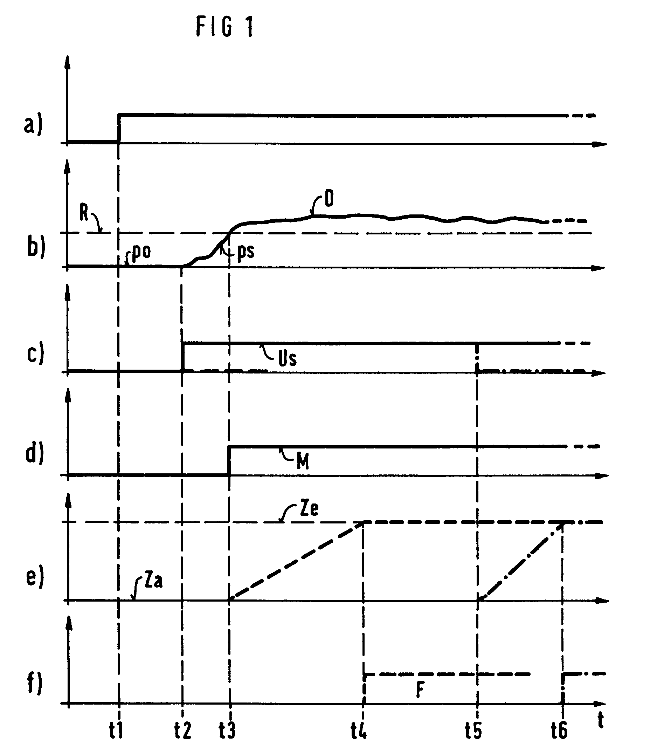

Anhand der in Figur 1 dargestellten Verläufe verschiedener Signale über der Zeit t wird das Verfahren zur Überwachung eines Kurbelwellen-Sensors beschrieben. In Figur 1a ist die Betriebsspannung über der Zeit dargestellt. Zum Zeitpunkt t1 wird die Zündung eingeschaltet, d.h., das Bordnetz mit der Spannungsquelle verbunden.

Zum Zeitpunkt t2 wird die Brennkraftmaschine gestartet. Zwischen den Zeitpunkten t1 und t2 wird gemäß dem aus der DE 32 28 598 bekannten Verfahren der von einem im Saugrohr der Brennkraftmaschine angeordneten Drucksensor gemessene Druckwert dem Umgebungsluftdruck po zugeordnet und gespeichert.

Unmittelbar nach dem Startbeginn zum Zeitpunkt t2 gibt der intakte Kurbelwellen-Sensor Impulse ab, die beispielsweise über ein nachfolgendes retriggerbares Monoflop in ein kontinuierliches H-Signal Us umgewandelt werden (Fig.1c). Um beim Kurbelwellen-Sensor unterscheiden zu können, ob er infolge Motorstillstandes oder infolge eines Defektes keine Signale abgibt, muß vorgegeben werden, wann er bei fehlerfreiem Betrieb Signale abgeben muß. Dazu werden die ausgewerteten Signale des Saugrohrdruck-Sensors der Brennkraftmaschine herangezogen.

Ab dem Start zum Zeitpunkt t2 beginnt sich im Saugrohr der Brennkraftmaschine ein Unterdruck ps aufzubauen, Figur 1b, dessen Differenz D zum vorher gemessenen Umgebungsluftdruck po im Zeitpunkt t3 einen vorgegebenen Referenzwert R übersteigt. Setzt man, wie in Figur 1b geschehen, den Umgebungsluftdruck po auf die Abszisse, so wird der Saugrohrdruck ps bzw. dessen Betrag ohne Berücksichtigung des Vorzeichens gleich der Differenz D = po - ps.

Solange die Differenz D den Referenzwert R übersteigt, wird ein Signal M, Figur 1d, erzeugt, welches den Motorbetrieb anzeigt. Solange also dieses Signal M vorliegt, muß bei intaktem Kurbelwellen-Sensor und intakten Zuleitungen ein Signal Us vorhanden sein, Figur 1c. Ist während des Signals M von Anfang an kein Signal Us vorhanden, in Fig.1c gestrichelt, oder verschwindet es während des Motorbetriebes, in Figur 1c strichpunktiert, so beginnt zu diesem Zeitpunkt (t3 bzw. t5) ein Zähler mit vorgegebener Taktfrequenz von einem An-fangszählerstand Za (in diesem Ausführungsbei-spiel ist Za = 0) hochzuzählen, Fig. 1e, bis er einen vorgegebenen Endzählerstand Ze im Zeitpunkt t4 oder t6 erreicht.

Erscheint das Signal Us vorher wieder, wird der Zähler sofort gelöscht. Wird aber der Endzählerstand Ze erreicht, so wird ein Fehlereintrag F in einem dafür vorgesehenen, der Steuereinrichtung zugeordneten Speicher abgelegt, Figur 1f, und bei einer späteren Diagnose angezeigt.

Bei einem Fehlereintrag F, der einen fehlerhaften Kurbelwellen-Sensor anzeigt, wird auf einen Nockenwellen-Sensor - der ein wesentlich geringeres Auflösungsvermögen als ein Kurbelwellen-Sensor aufweist, weil er nur halb so schnell umläuft - umgeschaltet, wenn ein solcher vorhanden ist, und die Brennkraftmaschine mit einem mit dessen Ausgangssignalen synchronisierten Notlaufprogramm weiter betrieben, so daß noch eine Reparaturwerkstätte mit eigener Kraft er reicht werden kann. Ist ein solcher Ersatz-Drehzahlgeber nicht vorhanden, muß die Brennkraftmaschine abgeschaltet werden, um größere Schäden zu vermeiden.

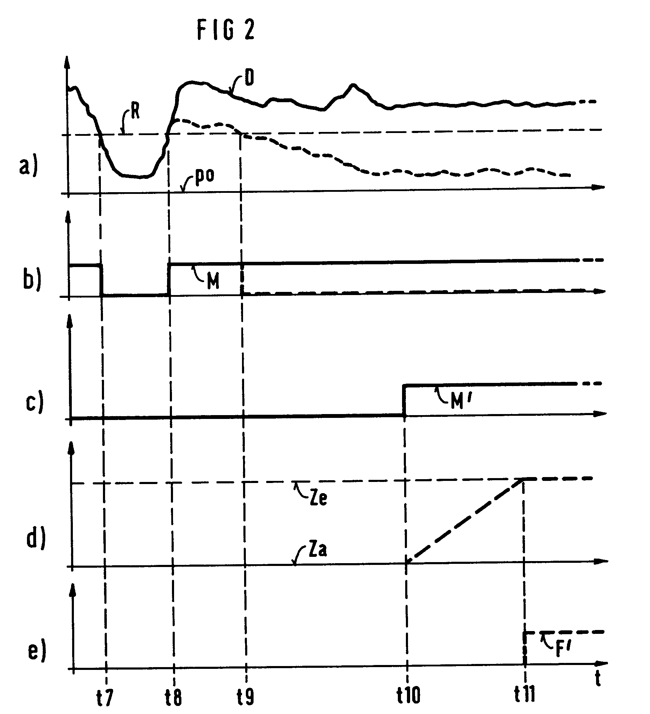

Um sicherzustellen, daß der für die Prüfung des Kurbelwellen-Sensors verwendete Saugrohrdruck-Sensor ordnungsgemäß arbeitet, muß dieser seinerseits überwacht werden. Diese Überwachung wird anhand der in Figur 2 dargestellten zeitlichen Verläufe verschiedener Signale beschrieben.

In Figur 2a ist, wie in Figur 1b, der Verlauf des Saugrohrdruckes als Differenz D zum Umgebungsluftdruck po dargestellt. Bei intaktem Saugrohrdruck-Sensor ist diese Differenz D nicht immer größer als der vorgegebene Referenzwert R. In instationären Betriebszuständen und im Bereich der maximalen Leistung (Drosselklappe weit offen) nähert sich der Saugrohrdruck ps dem Umgebungsluftdruck po an, wie in Fig. 2a zwischen den Zeitpunkten t7 und t8 dargestellt.

Dies ist auch der Fall, wenn der Saugrohrdruck-Sensor defekt wird oder die Sensordracklei-tung undicht wird oder ein Kurzschluß oder Leitungsbruch in der Sensorleitung auftritt, wie in Fig. 2a ab dem Zeitpunkt t8 strichliert dargestellt. Dann unterschreitet die Differenz im Zeitpunkt t9 den Referenzwert und bleibt weiterhin darunter. Entsprechend diesem Druckverlauf ist das Signal M, welches hier das Signal des zu überwachenden Sensors darstellt,entweder vorhanden, D > R, oder nicht vorhanden, D < R, vgl. Fig. 1d.

Bei Sensorüberwachungsverfahren, bei denen der Saugrohrdruck-Sensor überwacht oder mitverwendet wird, ist es zweckmäßig, die Überwachung auf Betriebszustände der Brennkraftmaschine zu beschränken, bei denen ein ausreichend großes Differenzsignal D>R mit Sicherheit zu erwarten ist. Dies sind Betriebszustände, in welchen die Drosselklappe der Brennkraftmaschine ganz oder nahezu ganz geschlossen ist, d.h., wenn die Drosselklappen-Öffnung unterhalb eines vorgegebenen Öffnungswinkels bleibt, wie Leerlauf, Teillastbereich oder Schubbetrieb der Brennkraftmaschine. Wenn ein solcher stationärer Betriebszustand vorliegt, erscheint ein Signal M', siehe Figur 2c, Zeitpunkt t10.

Solange das Signal M' vorliegt, muß also bei intaktem Saugrohrdruck-Sensor und intakten Zuleitungen ein Signal M vorhanden sein, Figur 2b und 2c.

Ist aber der Saugrohrdruck-Sensor intakt, so ist auch sichergestellt, daß die auf seinen Ausgangssignalen beruhende Aussage über die Funktionstüchtigkeit des Kurbelwellen-Sensors richtg ist.

Ist das Signal M' zum Zeitpunkt t10 nicht vorhanden, in Figur 2b gestrichelt dargestellt, so beginnt zu diesem Zeitpunkt wieder der - oder ein anderer - Zähler mit vorgegebener Taktfrequenz vom Anfangszählerstand Za hochzuzählen, Figur 2d, bis er den vorgegebenen Endzählerstand Ze im Zeitpunkt t11 erreicht, wodurch ein Fehlereintrag F' in einem dafür vorgesehenen Speicher abgelegt wird und die Brennkraftmaschine mit einem Notlaufprogramm weiter betrieben wird. In diesem Fall kann der ausgefallene Saugrohrdruck-Sensor durch einen Drosselklappen-Stellungsgeber der Brennkraftmaschine ersetzt werden.

Auf die gleiche Weise, wie für Kurbelwellen-Sensor und Saugrohrdruck-Sensor gezeigt, sind auch andere Sensoren der Brennkraftmaschine, wie Sensoren für Kühlwassertemperatur und Motoröl-temperatur, Öldruck, Brennraumdruck usw. über-püfbar, wobei dann ggf. eine Verzögerungszeit bis zu einigen Minuten vorgesehen sein kann, bis der überwachte Sensor, insbesondere Temperatursensor, mit Sicherheit ein ausreichendes Ausgangssignal abgibt, wenn er intakt ist.

**Patentansprüche**

1. Einrichtung zum Überwachen eines einer mit einer elektronischen Steuereinrichtung ausgerüsteten Brennkraftmaschine zugeordneten Kurbelwellen-, Nockenwellen- oder Saugrohrdruck-Sensors und dessen Verbindungsleitung zur Steuereinrichtung bzw. zum Meßort, der bei ordnungsgemäßer Funktion zumindest während bestimmter Motorbetriebsbereiche (M) oder in bestimmten stationären Betriebszuständen (M') Ausgangssignale (Us;D>R) abgibt,

    **dadurch gekennzeichnet,**

    daß sich die Brennkraftmaschine in einem bestimmten Motorbetriebsbereich (M) dann befindet, wenn die Differenz (D) zwischen den mittels des Saugrohrdruck-Sensors gemessenen Größen Saugrohrdruck (ps) der Brennkraftmaschine und Umgebungsluftdruck (po) einen vorgegebenen Referenzwert (R) übersteigt,

    daß die Steuereinrichtung den Kurbel- oder Nockenwellen-Sensor als fehlerhaft erkennt, wenn in bestimmten Motorbetriebsbereichen (M) kein Sensorsignal (Us) erscheint,

    daß die Steuereinrichtung den Saugrohrdruck-Sensor als fehlerhaft erkennt, wenn in bestimmten stationären Betriebszuständen (M') die Differenz (D) zwischen Saugrohrdruck (ps) und Umgebungsluftdruck (po) den vorgegebenen Referenzwert (R) nicht übersteigt,

    wobei ein stationärer Betriebszustand (M') dann gegeben ist, wenn die Öffnung der Drosselklappe der Brennkraftmaschine einen vorgegebenen Öffnungswinkel nicht überschreitet,

    daß bei als fehlerhaft erkanntem Kurbelwellen-, Nockenwellen- oder Saugrohrdruck-Sensor ein Zähler mit vorgegebener Taktfrequenz von einem vorgegebenen Anfangszählerstand (Za) bis zu einem vorgegebenen Endzählerstand (Ze) inkrementiert oder dekrementiert wird, und

    daß bei Erreichen des vorgegebenen Endzählerstandes (Ze) ein Fehlereintrag (F, F') in einem dafür vorgesehenen, der Steuereinrichtung zugeordneten Speicher abgelegt wird.

2. Einrichtung nach Anspruch 1,
    **dadurch gekennzeichnet,**
    daß bei Erreichen des vorgegebenen Endzählerstandes (Ze) die Brennkraftmaschine auf Notlaufbetrieb umgeschaltet wird.

3. Einrichtung nach Anspruch 2,
    **dadurch gekennzeichnet,**
    daß im Notlaufbetrieb die Ausgangssignale eines fehlerhaften Kurbelwellen-Sensors durch Ausgangssignale eines Nockenwellen-Sensors ersetzt werden.

4. Einrichtung nach Anspruch 2,
    **dadurch gekennzeichnet,**
    daß im Notlaufbetrieb die Ausgangssignale eines fehlerhaften Saugrohrdrucksensors durch Ausgangssignale eines Drosselklappen-Stellungsgebers ersetzt werden.

5. Einrichtung nach Anspruch 1,
    **dadurch gekennzeichnet,**
    daß bei Erreichen des vorgegebenen Endzählerstandes (Ze) die Brennkraftmaschine abgeschaltet wird.

# FIG 1

FIG 2

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-A-5 079 946 (MOTAMEDI ET AL) <br> * column 2, line 19 - column 6, line 19; figures 1,4 * <br> --- | 1-4 | G01D3/08 <br> F02D41/24 |
| X | GB-A-2 130 755 (FUJI J K K) <br> * page 2, line 70 - page 3, line 5; figure 2 * <br> --- | 1,2 | |
| X | GB-A-2 125 565 (HONDA) <br> * abstract; figures 1,2 * <br> --- | 1,2 | |
| A | EP-A-0 203 575 (HONDA) <br> * ZUSAMMENFASSUNG:SEITE 5 ZEIL 10-21* <br> ----- | 3 | |
| | | | TECHNICAL FIELDS SEARCHED (Int.Cl.5) <br><br> G01D <br> F02D <br> F02P <br> F02N |

The present search report has been drawn up for all claims

| Place of search | Date of completion of the search | Examiner |
|---|---|---|
| THE HAGUE | 11 November 1993 | LLOYD, P |

EPO FORM 1503 03.82 (P04C01)